# EUROPEAN PATENT APPLICATION

(11) **EP 3 336 809 A1**
(43) Date of publication of application: **20.06.2018**
(21) Application number: 17208241.4
(22) Date of filing: 18.12.2017
(51) Int. Cl.: G07G 1/14, G06Q 20/20

(54) **SETTLEMENT APPARATUS, CHECKOUT SYSTEM AND METHOD**

(30) Priority: 19.12.2016 JP 2016245574
(71) Applicant: Toshiba TEC Kabushiki Kaisha, Tokyo 141-8562 (JP)
(72) Inventor: GOTANDA, Tsuyoshi, Shinagawa-ku,, Tokyo 141-8562 (JP); NAKAJIMA, Takashi, Shinagawa-ku,, Tokyo 141-8562 (JP); SUGITA, Nobuhiro, Shinagawa-ku,, Tokyo 141-8562 (JP); MIYAZAKI, Jun, Shinagawa-ku,, Tokyo 141-8562 (JP); OTANI, Yuna, Shinagawa-ku,, Tokyo 141-8562 (JP); GOTOU, Chikashi, Shinagawa-ku,, Tokyo 141-8562 (JP); SUSAKI, Akiko, Shinagawa-ku,, Tokyo 141-8562 (JP)
(74) Representative: Takeuchi, Maya

(57) **Abstract**

A settlement apparatus comprising: an issuing module configured to issue an official receipt; an input module configured to input an instruction of issuing the official receipt according to an operation performed on an object by an operator; a display control module configured to display a first button indicating that the official receipt is issued if the instruction is input by the input module before settlement of the transaction is completed, and to display a second button not indicating that the official receipt is issued if the instruction is not input by the input module before settlement of the transaction is completed; a settlement module configured to perform settlement of the transaction in response to the operation on the first button or the second button; and an issuing control module configured to control the issuing module to issue the official receipt for the settlement performed by the settlement module if the first button is operated and not to issue the official receipt if the second button is operated.

## Description

### FIELD

The present invention relates to the field of checking out technologies in general, and embodiments described herein relate in particular to a checkout system, a registration apparatus, and a settlement apparatus.

### BACKGROUND

In a well-known checkout system, there is issued a document such as a receipt on which, for example, a commodity name purchased, unit price, number of quantities, total amount, tax, total settlement amount including tax, purchased date and time and a store name, and the like are printed, or an official receipt on which, for example, a total amount, an issue date and a store name are printed and a store seal is stamped. Further, on the official receipt, the name of customer to whom the official receipt is issued is handwritten, if needed and a revenue stamp is affixed, if required. In some cases, such document is needed or not needed depending on a customer. Therefore, for example, some checkout systems have an official receipt issuing button and a receipt issuing button. The official receipt issuing button or the receipt issuing button is pressed if it is needed. Further if the official receipt issuing button or the receipt issuing button is pressed, completion of the settlement is also declared. Therefore, a customer has to press one of the two buttons if the customer desires to complete the settlement. If the official receipt issuing button is selected, the completion of the settlement is automatically declared, and the checkout system issues the official receipt but does not issue the other receipt. If the receipt issuing button is selected, the completion of the settlement is automatically declared, and the checkout system issues the receipt but does not issue the official receipt. As described above, there are two different buttons for declaring the completion of the settlement. Thus, an operator, e.g., customer, who is not familiar with such configuration described above is confused at the time of instructing the completion of the settlement. An operator who usually needs the official receipt may press the official receipt issuing button without confusion. However, an operator who does not need the official receipt is likely to be confused because the operator may not accustomed to such a practice.

### SUMMARY OF THE INVENTION

To solve the above-cited problem, there is provided a settlement apparatus comprising: an issuing module configured to issue an official receipt; an input module configured to input an instruction of issuing the official receipt according to an operation performed on an object by an operator; a display control module configured to display a first button indicating that the official receipt is issued if the instruction is input by the input module before settlement of the transaction is completed, and to display a second button not indicating that the official receipt is issued if the instruction is not input by the input module before settlement of the transaction is completed; a settlement module configured to perform settlement of the transaction in response to the operation on the first button or the second button; and an issuing control module configured to control the issuing module to issue the official receipt for the settlement performed by the settlement module if the first button is operated and not to issue the official receipt if the second button is operated.

Preferably, a CPU is configured to set a flag on if said instruction is input by the input module before settlement of the transaction is completed, and set the flag off if said instruction is not input by the input module before settlement of the transaction is completed; and the display control module is configured to display a first button indicating that the official receipt is issued if the flag is set on, and to display a second button not indicating that the official receipt is issued if the flag is set off.

Preferably, the issuing module is further configured to issue a receipt different from the official receipt; and the issuing control module is configured to control the issuing module to issue the receipt for the settlement performed by the settlement module if the second button is operated and not to issue the receipt if the first button is operated.

Preferably, the object is displayed on at least one of a display device for store clerk or a display device for customer.

Preferably, the object is a button displayed on a display device provided on the registration apparatus or the settlement apparatus.

Preferably, a character string displayed on the button is "official receipt is required" or "please touch button if you need official button".

Preferably, the character string displayed on the button is changed when the button is operated.

Preferably, the character string displayed on the button after operation of the button is "official receipt is issued".

The invention also relates to a checkout system comprising the above settlement apparatus and a registration apparatus.

Preferably, the issuing module, the display control module, and the settlement module are provided in the registration apparatus.

The invention also relates to a method for issuing an official receipt by a settlement apparatus, comprising: inputting an instruction of issuing the official receipt according to the operation performed on an object by an operator; displaying a first button indicating issuance of the official receipt if the instruction is input before settlement of the transaction is completed; displaying a second button not indicating issuance of the official receipt if the instruction is not input before settlement of the transaction is completed; performing settlement of the transaction in response to the operation on the first button or the second button; and controlling the issuing module to issue the official receipt for the settlement performed in the settlement if the first button is operated and not to issue the official receipt if the second button is operated.

Preferably, the method futher comprises the step of: setting a flag on if said instruction is input by the input module before settlement of the transaction is completed; setting the flag off if said instruction is not input by the input module before settlement of the transaction is completed; and the step of displaying is further comprising the displaying a first button indicating that the official receipt is issued if the flag is set on; and the step of displaying is further comprising the displaying a second button not indicating that the official receipt is issued if the flag is set off.

Preferably, the step of controlling is further comprising the controlling the issuing module to issue a receipt different from the official receipt; and the step of controlling is further comprising the controlling the issuing module to issue the receipt for the settlement performed by the settlement module if the second button is operated and not to issue the receipt if the first button is operated.

Preferably, the object is a button displayed on a display device.

Preferably, a character string displayed on the button is "official receipt is required" or "please touch button if you need official button".

Preferably, the character string displayed on the button is changed when the button is operated.

Preferably, the character string displayed on the button after operation of the button is "official receipt is issued".

### DESCRIPTION OF THE DRAWINGS

FIG. 1 is a block diagram illustrating each main circuit configuration of apparatuses in a checkout system according to a first embodiment and a second embodiment;
FIG. 2 is a flowchart of a control process performed by a CPU of a registration apparatus in FIG. 1 according to the first and second embodiments;
FIG. 3 is a flowchart of a control process performed by a CPU of a settlement apparatus in FIG. 1 according to the first and second embodiments;
FIG. 4 is a flowchart of a control process performed by the CPU of the settlement apparatus according to the first and second embodiments;
FIG. 5 is a view illustrating an example of a screen displayed on a touch panel for store clerk of the registration apparatus shown in FIG. 1;
FIG. 6 is a view illustrating an example of a screen displayed on a touch panel for customer of the registration apparatus shown in FIG. 1;
FIG. 7 is a view illustrating an example of a screen displayed on the touch panel for store clerk of the registration apparatus shown in FIG. 1;
FIG. 8 is a view illustrating an example of a screen displayed on a touch panel of the settlement apparatus shown in FIG. 1;
FIG. 9 is a view illustrating an example of a screen displayed on the touch panel of the settlement apparatus shown in FIG. 1;
FIG. 10 is a view illustrating an example of a screen displayed on the touch panel of the settlement apparatus shown in FIG. 1;
FIG. 11 is a view illustrating an example of a screen displayed on the touch panel of the settlement apparatus shown in FIG. 1;
FIG. 12 is a view illustrating an example of a screen displayed on the touch panel of the settlement apparatus shown in FIG. 1; and
FIG. 13 is a view illustrating an example of a screen displayed on the touch panel of the settlement apparatus shown in FIG. 1.

### DETAILED DESCRIPTION

A checkout system according to one embodiment includes a registration apparatus for registering contents of a transaction and a settlement apparatus operated by a person who executes settlement of the transaction. The checkout system includes an issuing module, an input module, a display control module, a settlement module, and an issuing control module. The issuing module is included in the settlement apparatus, and is configured to issue an official receipt. The input module is included in at least one of the registration apparatus and the settlement apparatus, and is configured to input an instruction of issuing the official receipt according to an operation performed on an object by an operator. The display control module is included in at least one of the registration apparatus and the settlement apparatus, and is configured to display a first button indicating issuance of the official receipt if the instruction is input by the input module before settlement of the transaction is completed, and to display a second button not indicating issuance of the official receipt if the instruction is not input by the input module before settlement of the transaction is completed. The settlement module is included in the settlement apparatus, and is configured to perform settlement of the transaction in response to the operation on the first button or the second button. The issuing control module is included in the settlement apparatus, and is configured to control the issuing module to issue the official receipt for the settlement performed by the settlement module if the first button is operated and not to issue the official receipt if the second button is operated.

Hereinafter, checkout systems according to embodiments are described with reference to the accompanying drawings.

### (First Embodiment)

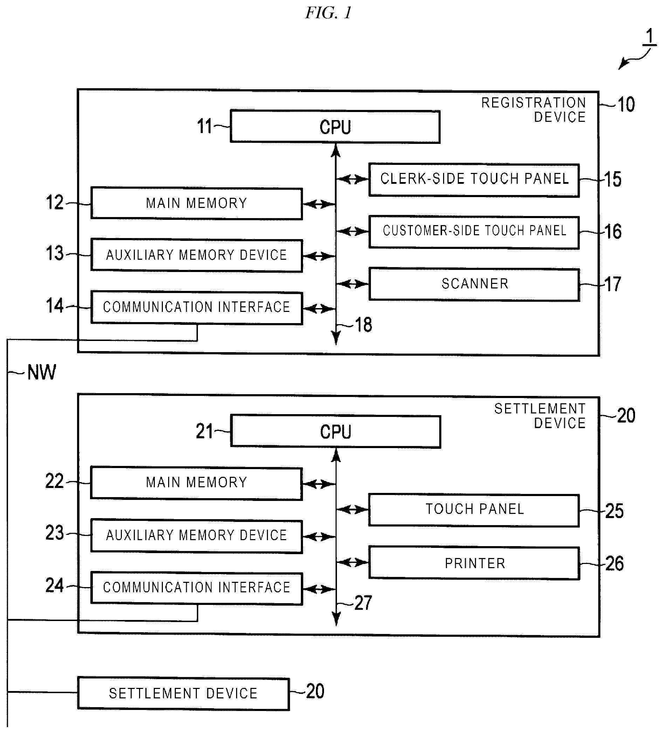

FIG. 1 is a block diagram illustrating each main circuit configuration of apparatuses included in a checkout system 1 according to a first embodiment. The checkout system 1 is installed in a store such as a supermarket to carry out a checkout jobs such as sales registration of a commodity to be purchased and settlement of the commodity. The checkout system 1 includes a registration apparatus 10 and a settlement apparatus 20. The checkout system 1 is a semi-self-checkout system in which a store clerk mainly operates the registration apparatus 10 which registers the commodity to be purchased in one transaction and a person for settlement such as a customer operates the settlement apparatus 20 which performs settlement for payment of registered commodity. The registration apparatus 10 and the settlement apparatus 20 are connected to a network NW. The network NW is typically a LAN (Local Area Network). The network NW may be a wireless or a wired circuit. The wireless line and the wired line may be mixed with each other. FIG. 1 illustrates one registration apparatus 10 and two settlement apparatuses 20. However, the number of registration apparatuses 10 and settlement apparatuses 20 is not limited thereto. It may freely determine the number of registration apparatuses 10 and settlement apparatuses 20 respectively installed in a store according to, for example, a size of the store or the number of customers. FIG. 1 illustrates only the main circuit configuration of one settlement apparatus 20, but the main circuit configuration of the other settlement apparatus 20 is omitted in the figure.

The registration apparatus 10 includes a CPU (Central Processing Unit) 11, a main memory 12, an auxiliary memory device 13, a communication interface 14, a touch panel for store clerk 15, a touch panel for customer 16, a scanner 17, and a bus 18.

The CPU 11 acts as a central unit of a computer that performs a processing and a control required for an operation of the registration apparatus 10. The CPU 11 controls each unit to realize various functions of the registration apparatus 10 according to a program such as an operating system and application software stored in the main memory 12.

The main memory 12 acts as a main storage unit of the computer. The main memory 12 stores a program such as an operating system and application software. The main memory 12 also stores data referred to at the time the CPU 11 performs various processing. Furthermore, the main memory 12 is used as a so-called work area for storing data temporarily used at the time the CPU 11 performs various processing.

The auxiliary memory device 13 acts as an auxiliary storage unit of the above-described computer. For example, the auxiliary memory device 13 is an EEPROM (Electric Erasable Programmable Read-Only Memory), an HDD (Hard Disk Drive), or an SSD (Solid State Drive). The auxiliary memory device 13 stores data used at the time the CPU 11 performs various processing, and data generated through processing of the CPU 11. In some cases, the auxiliary memory device 13 stores a program such as the above-described operating system or application. The auxiliary memory device 13 also stores a commodity list which is a data of commodities registered as purchased commodities. Alternatively, the main memory 12 may store the above-described commodity list. The auxiliary memory device 13 also stores commodity database including various information items such as a commodity code, a commodity name and the amount for commodities sold in a store.

A program stored in the main memory 12 or the auxiliary memory device 13 includes a control program described in relation to a control process (to be described later). As an example, the registration apparatus 10 is transferred to a manager of the registration apparatus 10 in a state in which the control program is stored in the main memory 12 or the auxiliary memory device 13. However, the registration apparatus 10 may be transferred to the manager in a state in which the control program is not stored in the main memory 12 or the auxiliary memory device 13. The control program separately transferred to the manager may be written on the main memory 12 or the auxiliary memory device 13 under the operation of the manager or a service person. In this case, the transfer of the control program can be realized by recording the control program on a removable recording medium such as a magnetic disk, a magneto optical disk, an optical disk, and a semiconductor memory, or by downloading the control program via a network.

The communication interface 14 is provided for the registration apparatus 10 to perform communication via the network.

The touch panel for store clerk 15 functions as a display device for displaying a screen for notifying a store clerk serving as an operator of the registration apparatus 10 of various information items. The touch panel for store clerk 15 also functions as an input module for receiving a touch operation performed by the operator.

The touch panel for customer 16 functions as a display device for displaying a screen for notifying a customer of various information items. The touch panel for customer 16 also functions as an input module for receiving a touch operation performed by the customer. As described above, the operator of the registration apparatus 10 is mainly the store clerk. However, the touch panel for customer 16 is operated by the customer serving as the operator at the time of settlement.

The scanner 17 reads a barcode attached to a commodity to output a commodity code represented by this barcode. The scanner 17 may be a handy type or a fixed type on a register table.

The bus 18 includes an address bus and a data bus, and transmits a signal to or from respective units of the registration apparatus 10.

The settlement apparatus 20 includes a CPU 21, a main memory 22, an auxiliary memory device 23, a communication interface 24, a touch panel 25, a printer 26, and a bus 27.

The CPU 21 acts as a central unit of a computer that performs processing and control required for an operation of the settlement apparatus 20. The CPU 21 controls each unit to realize various functions of the settlement apparatus 20 according to a program such as an operating system and application software stored in the main memory 22.

The main memory 22 acts as a main storage unit of the computer. The main memory 22 stores a program such as an operating system and application software. The main memory 22 also stores data referred to at the time the CPU 21 performs various processing. Furthermore, the main memory 22 is used as a so-called work area for storing data temporarily used at the time the CPU 21 performs various processing.

The auxiliary memory device 23 acts as an auxiliary storage unit of the above-described computer. For example, the auxiliary memory device 23 is the EEPROM, the HDD, or the SSD. The auxiliary memory device 23 stores data used at the time the CPU 21 performs various processing, and data generated through processing of the CPU 21. In some cases, the auxiliary memory device 23 stores a program such as the above-described operating system or application.

A program stored in the main memory 22 or the auxiliary memory device 23 includes a control program described in relation to a control processing (to be described later). As an example, the settlement apparatus 20 is transferred to a manager of the settlement apparatus 20 in a state in which the control program is stored in the main memory 22 or the auxiliary memory device 23. However, the settlement apparatus 20 may be transferred to the manager in a state in which the control program is not stored in the main memory 22 or the auxiliary memory device 23. The control program separately transferred to the manager may be written on the main memory 22 or the auxiliary memory device 23 under the operation of the manager or a service person. In this case, the transfer of the control program can be realized by recording the control program on a removable recording medium such as a magnetic disk, a magneto optical disk, an optical disk, and a semiconductor memory, or by downloading the control program via a network.

The communication interface 24 is provided for the settlement apparatus 20 to perform communication via the network.

The touch panel 25 functions as a display device for displaying a screen for notifying the operator of the settlement apparatus 20 of various information items. The touch panel 25 functions as an input module for receiving a touch operation performed by the operator.

The printer 26 prints receipt and official receipt. Therefore the printer 26 functions as an issuing module. The printer 26 can employ various systems such as an impact-dot printer, an ink jet printer, a thermal printer, a laser printer, or other printers.

The bus 27 includes an address bus and a data bus, and transmits a signal to or from respective units of the settlement device 20.

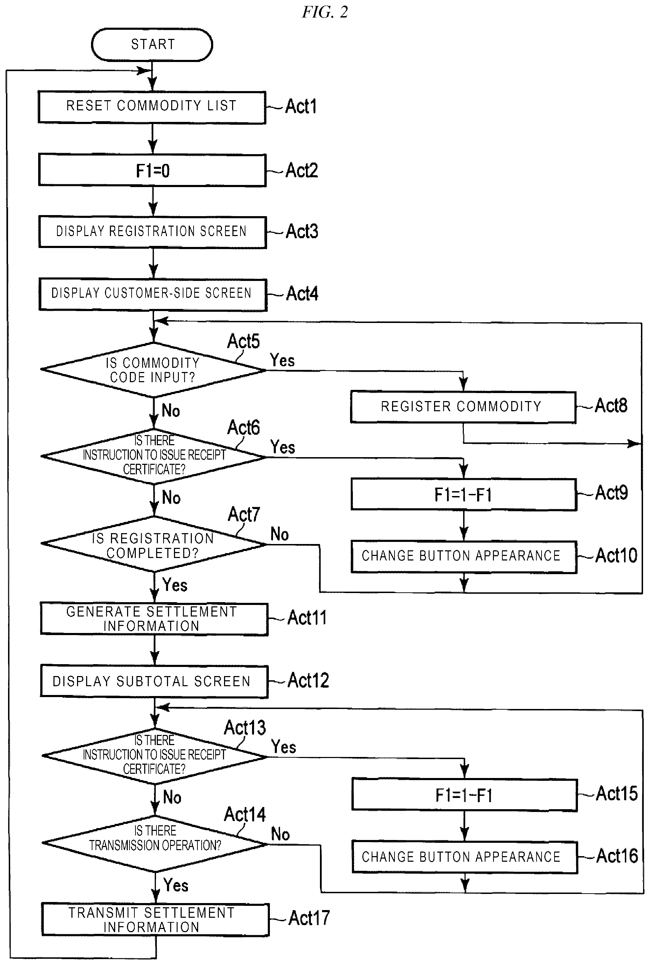

Hereinafter, an operation of the checkout system 1 according to the first embodiment is described with reference to FIGS. 2 to 4. Contents of processing described below are merely examples, and various processing capable of achieving similar results can be appropriately adopted.

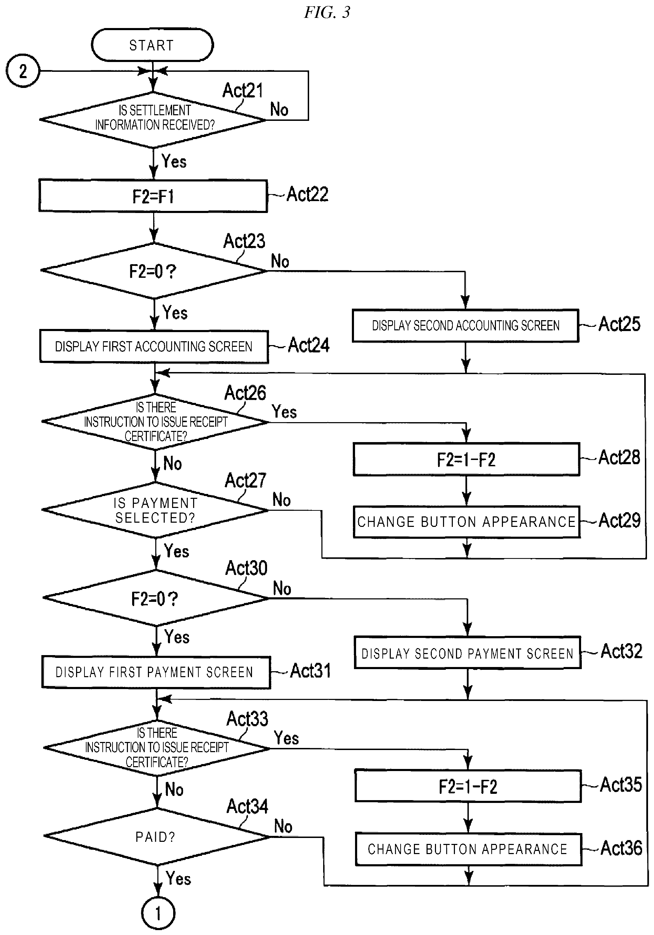

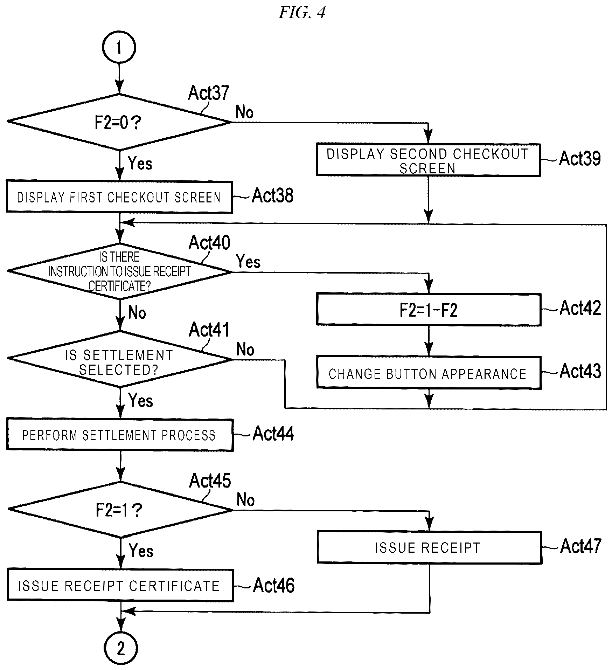

In the first embodiment, the main memory 12 or the auxiliary memory device 13 of the registration apparatus 10 stores a control program described with regard to a control processing illustrated in FIG. 2. The main memory 22 or the auxiliary memory device 23 of the settlement apparatus 20 stores a control program described with regard to a control processing illustrated in FIGS. 3 and 4.

FIG. 2 is a flowchart of the control processing performed by the CPU 11 of the registration apparatus 10. The CPU 11 performs the control processing according to the control program stored in the main memory 12 or the auxiliary memory device 13. When starting the control processing illustrated in FIG. 2, the CPU 11 allocates a variable F1 to the main memory 12. The variable F1 is used as a flag. If a value of the variable F1 is 0, it is assumed that the flag represented by the variable F1 is set off or invalid. If the value of the variable F1 is 1, it is assumed that the flag represented by the variable F1 is set on or valid.

FIGS. 3 and 4 are flowcharts of the control processing performed by the CPU 21 of the settlement apparatus 20. The CPU 21 performs the control processing according to the control program stored in the main memory 22 or the auxiliary memory device 23. When starting the control processing illustrated in FIGS. 3 and 4, the CPU 21 allocates a variable F2 to the main memory 22. The variable F2 is used as a flag. If a value of the variable F2 is 0, it is assumed that the flag represented by the variable F2 is set off or invalid. If the value of the variable F2 is 1, it is assumed that the flag represented by the variable F2 is set on or valid.

In Act 1 of FIG. 2, the CPU 11 of the registration apparatus 10 resets a commodity list stored in the main memory 12 or the auxiliary memory device 13. The CPU 11 instructs the main memory 12 or the auxiliary memory device 13 so that commodities are not stored in the commodity list.

In Act 2, the CPU 11 sets the value of the variable F1 to 0 so as to set the commodity list into a state in which the flag represented by the variable F1 is invalid.

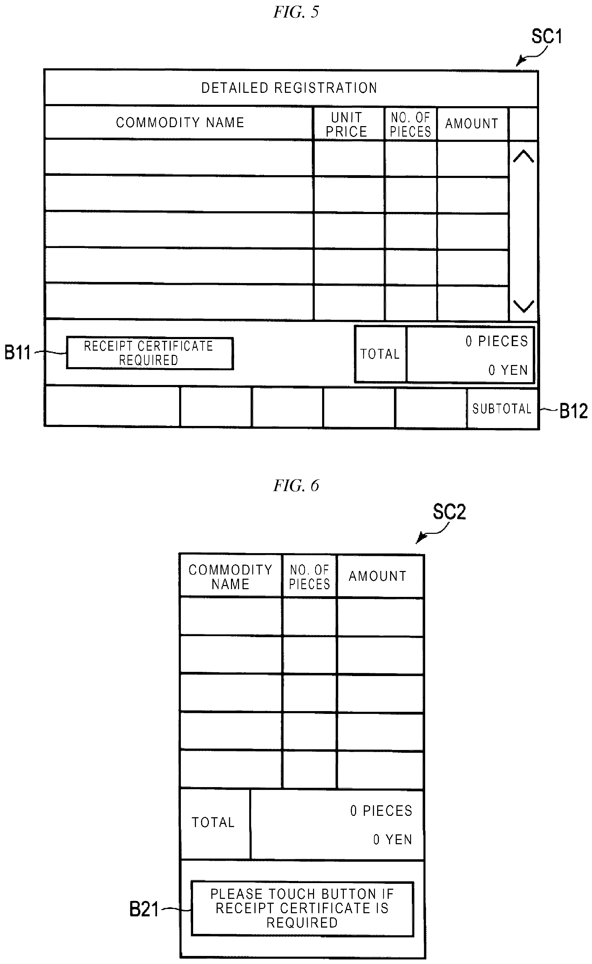

In Act 3, the CPU 11 generates an image corresponding to a registration screen SC1 as illustrated in FIG. 5. The CPU 11 instructs the touch panel for store clerk 15 to display the generated image. Upon receiving the instruction, the touch panel for store clerk 15 displays the registration screen SC1.

FIG. 5 is a view illustrating an example of the registration screen SC1. The registration screen SC1 displays each commodity name, unit price, number of quantities, amount, and total amount of the commodities already registered in the commodity list. The registration screen SC1 includes an official receipt button B11 and a subtotal button B12. If the official receipt is issued, the official receipt button B11 is operated by the operator of the registration apparatus 10 in response to a request from the customer. The official receipt button B11 displays a character string, e.g., "official receipt is required", clearly indicating that the button B11 is pressed if an official receipt is needed. The official receipt button B11 is an example of an object for being operated by the operator to instruct issuance of the receipt. The subtotal button B12 is operated by the operator of the registration apparatus 10 at the time the commodity registration is completed.

In Act 4, the CPU 11 generates an image corresponding to a screen for customer SC2 as shown in FIG. 6. The CPU 11 instructs the touch panel for customer 16 to display the generated image. Upon receiving the instruction, the touch panel for customer 16 displays the screen for customer SC2.

FIG. 6 is a view illustrating an example of the screen for customer SC2. The screen for customer SC2 displays each commodity name, number of quantities, and amount of the commodities already registered in the commodity list. The screen for customer SC2 includes an official receipt button B21. The official receipt button B21 is operated if the customer wants the official receipt to be issued.

In Act 5, the CPU 11 confirms whether or not the commodity code is read. The CPU 11 waits for an input of the commodity code. The commodity code is input to the registration apparatus 10 as described below. The operator of the registration apparatus 10 reads a barcode attached to the commodity through the scanner 17. In this manner, the commodity code coded to the barcode is input to the registration apparatus 10. The touch panel for store clerk 15 displays buttons respectively associated with or indicating commodities having no barcode attached thereto. The operator of the registration apparatus 10 touches one of the buttons, displayed on the touch panel for store clerk 15, which indicates the commodity to be registered in the commodity list. In this manner, the commodity code of the commodity associated with the button is input. If the commodity code is not input, No is taken in Act 5, and the CPU 11 proceeds to the processing in Act 6.

In Act 6, the CPU 11 confirms whether or not an operation for instructing issuance of the official receipt is performed. The CPU 11 confirms whether or not a predetermined operation is performed such that the official receipt button B11 displayed on the registration screen SC1 or the official receipt button B21 displayed on the screen for customer SC2 is touched. Therefore, the processing in Act 6 is performed, and thus a computer having the CPU 11 functions as an input unit for inputting the instruction of issuing the official receipt based on the operation performed on the button. If the operation for instructing issuance of the official receipt is not performed, No is taken in Act 6, and the CPU 11 proceeds to the processing in Act 7.

In Act 7, the CPU 11 confirms whether or not an operation for completing commodity registration is performed. The CPU 11 confirms whether or not a predetermined operation is performed such that, for example, the subtotal button B12 displayed on the registration screen SC1 is touched. It is determined beforehand as an operation rule that an operation for instructing completion of the registration is performed after one or more commodities are registered. The operation of the CPU 11 if the operation for instructing completion of the registration is performed in a state in which the commodity is not registered may be determined by a designer of the control program of the CPU 11. For example, the CPU 11 ignores the operation for instructing completion of the registration. Alternatively, in a state in which the commodity is not registered, it may be constituted that the operation itself for instructing completion of the registration cannot be performed. If the operation for instructing completion of the registration is not performed, No is taken in Act 7, and the CPU 11 returns to the processing in Act 5. The CPU 11 repeatedly performs the processing in Act 5 to Act 7 until the commodity code is input, the operation for instructing issuance of the official receipt is performed, or the operation for instructing completion of the registration is performed.

The store clerk reads the barcode attached to a commodity to be registered with the scanner 17. Alternatively, the store clerk touches a button indicating the commodity in the buttons displayed on the touch panel for store clerk 15.

If the commodity code is input in a standby state in Act 5 to Act 7, Yes is taken in Act 5, and the CPU 11 proceeds to the processing in Act 8.

In Act 8, the CPU 11 adds the commodity code reading of which is confirmed in Act 5 to the commodity list stored in the main memory 12 or the auxiliary memory device 13. The CPU 11 returns to the processing in Act 5 after performing the processing in Act 8.

If the customer needs the official receipt, the customer requests the store clerk to issue the official receipt. Upon receiving the request from the customer, the store clerk touches the official receipt button B11 displayed on the registration screen SC1. Alternatively, if the customer needs the official receipt, the customer touches the official receipt button B21 displayed on the screen for customer SC2.

If the operation for instructing issuance of the official receipt is performed in the standby state in Act 5 to Act 7, Yes is taken in Act 6, and the CPU 11 proceeds to the processing in Act 9.

In Act 9, the CPU 11 sets the flag on (valid) if the flag represented by the variable F1 is invalid, and sets the flag off (invalid) if the flag is valid. Specifically, the CPU 11 substitutes a value obtained with a calculation expression of (1-F1) for the variable F1. If the flag represented by the variable F1 is valid, the flag indicates that the official receipt is issued.

In Act 10, the CPU 11 changes an appearance of the official receipt button B11 and the official receipt button B21. If the value of the variable F1 is 1, the CPU 11 changes the appearance of the official receipt button B11 and the official receipt button B21 to be able to recognize that the official receipt button B11 or the official receipt button B21 is operated or that the official receipt is issued. If the value of the variable F1 is 0, the CPU 11 returns the appearance of the official receipt button B11 and the official receipt button B21 to the appearance as illustrated in FIG. 5 or 6. A state of the official receipt button displayed on the touch panel for store clerk 15 or the touch panel for customer 16 is referred to as a selected state if the value of the variable F1 is 1, and a state of the official receipt button is referred to as a non-selected state if the value of the variable F1 is 0. To change the appearance of the official receipt button B11, the CPU 11 generates an image corresponding to the registration screen including the official receipt button B11 in the selected state or in the non-selected state, and instructs the touch panel for store clerk 15 to display the image. Upon receiving the instruction, the touch panel for store clerk 15 displays the registration screen. Further, to change the appearance of the official receipt button B21, the CPU 11 generates an image corresponding to the screen for customer including the official receipt button B21 in the selected state or in the non-selected state, and instructs the touch panel for customer 16 to display the image. Upon receiving the instruction, the touch panel for customer 16 displays the screen for customer.

As described above, each time the official receipt button B11 and the official receipt button B21 are operated, the two states of the selected state and the non-selected state are alternately switched therebetween.

After performing the processing in Act 10, the CPU 11 returns to the processing in Act 5.

The store clerk performs an operation for instructing completion of the commodity registration if registration of the commodity to be purchased in one transaction is completed. If the operation for instructing completion of the registration is performed in the standby state in Act 5 to Act 7, Yes is taken in Act 7, and the CPU 11 proceeds to the processing in Act 11.

In Act 11, the CPU 11 generates settlement information. The settlement information includes information required for the settlement apparatus 20 to execute settlement of the commodity registered in the commodity list.

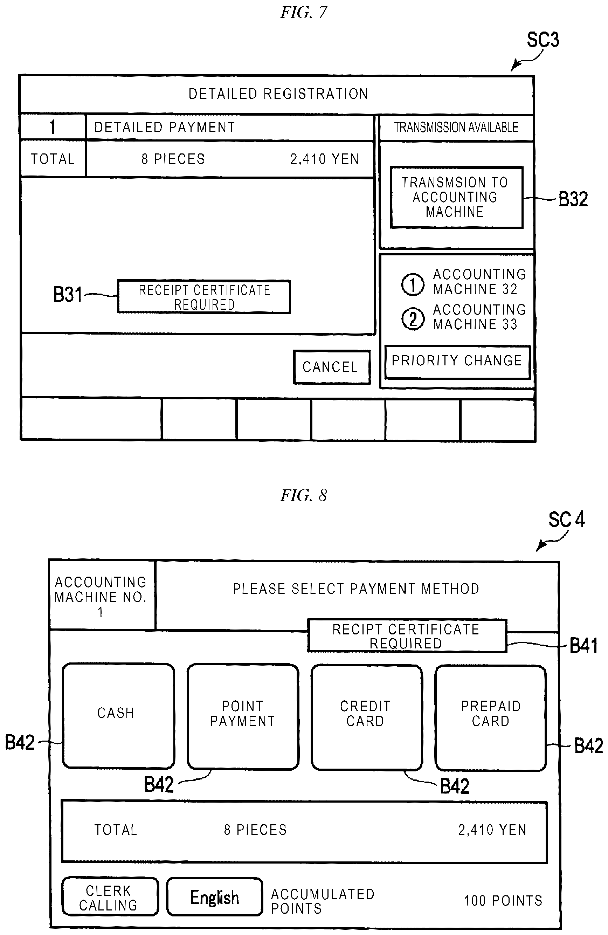

In Act 12, the CPU 11 generates an image corresponding to a subtotal screen SC3 as illustrated in FIG. 7. The CPU 11 instructs the touch panel for store clerk 15 to display the generated image. Upon receiving the instruction, the touch panel for store clerk 15 displays the subtotal screen SC3. On the other hand, the touch panel for customer 16 continuously displays the screen for customer SC 2.

FIG. 7 is a view illustrating an example of the subtotal screen SC3. The subtotal screen SC3 displays the total amount of the commodities registered in the commodity list. The subtotal screen SC3 includes an official receipt button B31 and a transmission button B32. Similarly to the official receipt button B11 in FIG. 5, the official receipt button B31 is operated by the operator of the registration apparatus 10 in response to a request from the customer if the official receipt is issued. Similarly to the official receipt button B11 in FIG. 5, the official receipt button B31 displays a character string, e.g., "official receipt is required", for recognizing that the official receipt button B31 is pressed if the official receipt is issued. The official receipt button B31 is an example of an object for being operated by the operator to instruct issuance of the official receipt. The subtotal screen SC3 illustrated in FIG. 7 displays a state in which the value of the variable F1 is 0, and the official receipt button B31, illustrated in FIG. 7, in the non-selected state is displayed. If the value of the variable F1 is 1, the official receipt button B31 in the selected state is displayed. The transmission button B32 is operated by the operator if the settlement information is transmitted to the settlement apparatus 20. An accounting machine illustrated in FIG. 7 indicates the settlement apparatus 20.

In Act 13, the CPU 11 confirms whether or not an operation for instructing issuance of the official receipt is performed. The CPU 11 confirms whether or not a predetermined operation such as touching the receipt certificate button B31 displayed on the subtotal screen SC3 is performed. By executing the processing in Act 13, the computer having the CPU 11 functions as the input unit for inputting the instruction for issuing the official receipt based on the operation performed on the object. If the operation for instructing issuance of the official receipt is not performed, No is taken in Act 13, and the CPU 11 proceeds to the processing in Act 14.

In Act 14, the CPU 11 confirms whether or not the operation for instructing transmission of the settlement information to the settlement apparatus 20 is performed. In other words, the CPU 11 confirms whether or not a predetermined operation such as touching the transmission button B32 displayed on the subtotal screen SC 3 is performed. If the operation for instructing transmission of the settlement information is not performed, No is taken in Act 14, and the CPU 11 returns to the processing in Act 13. The CPU 11 repeatedly performs the processing in Act 13 and Act 14 until the official receipt button is operated or the operation for instructing transmission of the settlement information is performed. If the official receipt button is operated in the standby state in Act 13 and Act 14, Yes is taken in Act 13, and the CPU 11 proceeds to the processing in Act 15.

In ACT 15, the CPU 11 substitutes the value obtained by the calculation expression of (1-F1) for the variable F1 similarly to the processing in Act 9.

In Act 16, the CPU 11 changes the appearance of the official receipt button similarly to the processing in Act 10. However, the official receipt button the appearance of which is changed by the CPU 11 is the official receipt button B21 and the official receipt button B31. After the processing in Act 16 is performed, the CPU 11 returns to the processing in Act 13.

The store clerk operates the transmission button B32 to transmit the settlement information to the settlement apparatus 20 after the operation for instructing completion of the commodity registration is performed.

If the operation for instructing transmission of the settlement information is performed in the standby state in Act 13 and Act 14, Yes is taken in Act 14, and the CPU 11 proceeds to the processing in Act 17.

In Act 17, the CPU 11 instructs the communication interface 14 to transmit the settlement information generated in Act 11 and the value of the variable F1 to the settlement apparatus 20. Upon receiving the instruction, the communication interface 14 transmits the settlement information and the value of the variable F1 to the settlement apparatus 20. In this case, if a plurality of settlement apparatuses 20 are installed in a store, for example, the CPU 11 determines beforehand one settlement apparatus 20 in the plurality of settlement apparatuses 20 as a transmission destination of the settlement information and the value of the variable F1. The settlement information and the value of the variable F1 transmitted are received by the communication interface 24 of the one settlement apparatus 20.

In Act 21 of FIG. 3, the CPU 21 of the settlement apparatus 20 waits for the value of the settlement information and the variable F1 to be received by the communication interface 24. If the settlement information and the value of the variable F1 are received, Yes is taken in Act 21, and the CPU 21 proceeds to the processing in Act 22. The value of the variable F1 is set to 0 or 1, based on the operation performed on the official receipt button displayed on the registration apparatus 10. The variable F1 represents that issuance of the official receipt is instructed, if the value thereof is 1. Therefore, the processing in Act 21 is performed, and thus the computer having the CPU 21 functions as an input unit for inputting the instruction for issuance of the official receipt according to the operation performed on the object.

In Act 22, the CPU 21 substitutes the value of the variable F1 reception of which is confirmed in Act 21 for the variable F2.

In Act 23, the CPU 21 confirms whether or not the value of the variable F2 is 0. If the value of the variable F2 is 0, Yes is taken in Act 23, and the CPU 21 proceeds to the processing in Act 24.

In Act 24, the CPU 21 generates an image corresponding to a first settlement screen SC4 as illustrated in FIG. 8. The CPU 21 instructs the touch panel 25 to display the generated image. Upon receiving the instruction, the touch panel 25 displays the first settlement screen SC4.

FIG. 8 is a view illustrating an example of the first settlement screen SC4. The first settlement screen SC4 includes an official receipt button B41 and a plurality of selection buttons B42. The official receipt button B41 is operated at the time the customer instructs the settlement apparatus 20 to issue the official receipt. The official receipt button B41 displays a character string, e.g., "official receipt is required" or "please touch button if you need official receipt", for recognizing that the receipt certificate button B41 is pressed if the official receipt needs. The official receipt button B41 is an example of the object for being operated by the operator to instruct issuance of the official receipt. Each of the plurality of selection buttons B42 corresponds to a payment method such as "cash", "point payment", "credit card", or "prepaid card". Each of the plurality of selection buttons B42 is operated at the time the customer selects the corresponding payment method. In FIG. 8, the number of selection buttons B42 is four, but is not limited to four. The selection buttons B42 may be displayed as many as selectable payment methods.

If the value of the variable F2 is 1, No is taken in Act 23, and the CPU 21 proceeds to the processing in Act 25.

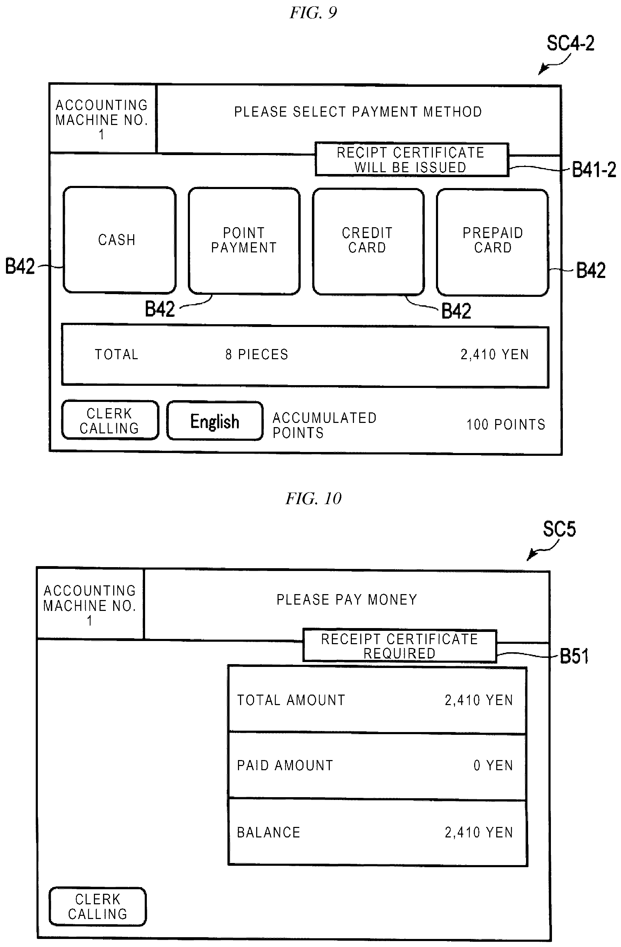

In Act 25, the CPU 21 generates an image corresponding to a second settlement screen SC4-2 as illustrated in FIG. 9. The CPU 21 instructs the touch panel 25 to display the generated image. Upon receiving the instruction, the touch panel 25 displays the second settlement screen SC4-2.

FIG. 9 is a view illustrating an example of the second settlement screen SC4-2. In FIG. 9, the same reference numerals as those in FIG. 8 are applied to the same elements as those in FIG. 8. The second settlement screen SC4-2 includes an official receipt button B41-2, instead of the official receipt button B41 of the first settlement screen SC4. The official receipt button B41-2 is operated at the time the customer instructs the settlement device 20 to stop issuance of the official receipt. The official receipt button B41-2 displays a character string, e.g., "official receipt is issued", for notifying that the official receipt is issued or a character string, e.g., "no official receipt is needed", for recognizing that the official receipt button B41-2 is pressed if the official receipt is not required.

In Act 26, the CPU 21 confirms whether or not the operation for instructing issuance of the official receipt or cancellation of issuance of the official receipt is performed. In other words, the CPU 21 confirms whether or not a predetermined operation is performed such as touching the official receipt button B41 displayed on the first settlement screen SC4 or the official receipt button B41-2 displayed on the second settlement screen SC4-2. As described above, the official receipt button B41 displayed on the first settlement screen SC4 is the object. Therefore, if the processing in Act 26 is performed, the computer having the CPU 21 functions as an input unit for inputting the instruction of issuing the official receipt according to the operation performed on the object. If the operation for instructing issuance of the official receipt is not performed, No is taken in Act 26, and the CPU 21 proceeds to the processing in Act 27.

In Act 27, the CPU 21 confirms whether or not an operation for selecting a payment method is performed. In other words, the CPU 21 confirms whether or not a predetermined operation such as touching one of the plurality of selection buttons B42 displayed on the first settlement screen SC4 or the second settlement screen SC4-2 is performed. If the operation for selecting the payment method is not performed, No is taken in Act 27, and the CPU 21 returns to the processing in Act 26. The CPU 21 repeatedly performs the processing in Act 26 and Act 27 until the operation for instructing issuance of the official receipt or cancellation of issuance of the official receipt is performed, or until the operation for selecting the payment method is performed. If the operation for instructing issuance of the official receipt or the operation for instructing cancellation of issuance of the official receipt in the standby state in Act 27 and Act 28 is performed, Yes is taken in Act 26, and the CPU 21 proceeds to the processing in Act 28.

In Act 28, the CPU 21 substitutes the value obtained by the calculation expression of (1-F2) for the variable F2.

In Act 29, the CPU 21 changes the appearance of the official receipt button B41 or the official receipt button B41-2. If the value of the variable F2 is 1, the CPU 21 changes the screen displayed on the touch panel 25 from the first settlement screen SC4 illustrated in FIG. 8 to the second settlement screen SC4-2 illustrated in FIG. 9 as the first shown in FIG. 8 so as to notify that the official receipt button B41 is operated. The CPU 21 generates an image corresponding to the second settlement screen SC4-2. The CPU 21 instructs the touch panel 25 to display the generated image. Upon receiving the instruction, the touch panel 25 displays the second settlement screen SC4-2. If the value of the variable F2 is 0, the CPU 11 changes the screen displayed on the touch panel 25 from the second settlement screen SC4-2 to the first settlement screen SC4 so as to notify that the official receipt button B41-2 is operated. The CPU 21 generates an image corresponding to the first settlement screen SC4. The CPU 21 instructs the touch panel 25 to display the generated image. Upon receiving the instruction, the touch panel 25 displays the first settlement screen SC4.

After the processing in Act 29 is performed, the CPU 21 returns to the processing in Act 26.

The customer touches the selection button B42 corresponding to the payment method selected by the customer.

If the operation for selecting the payment method is performed in the standby state in Act 26 and Act 27, Yes is taken in Act 27, and the CPU 21 proceeds to the processing in Act 30. Hereinafter, description is made on the assumption that the selection button B42 corresponding to "cash" is operated.

In Act 30, the CPU 21 confirms whether or not the value of the variable F2 is 0. If the value of the variable F2 is 0, Yes is taken in Act 30, and the CPU 21 proceeds to the processing in Act 31.

In Act 31, the CPU 21 generates an image corresponding to a first payment screen SC5 as illustrated in FIG. 10. The CPU 21 instructs the touch panel 25 to display the generated image. Upon receiving the instruction, the touch panel 25 displays the first payment screen SC 5.

FIG. 10 is a view illustrating an example of the first payment screen SC5. The first payment screen SC5 indicates that the customer is instructed to carry out payment for settlement on the settlement apparatus 20. The first payment screen SC5 includes an official receipt button B51. Similarly to the official receipt button B41 in FIG. 8, the official receipt button B51 is operated if the customer instructs the settlement apparatus 20 to issue the official receipt.. Similarly to the official receipt button B41 in FIG. 8, the official receipt button B51 displays a character string, e.g., "official receipt is required" or "please touch button if you need official receipt", for recognizing that the official receipt button B51 is pressed if the official receipt is needed. A position at which the official receipt button B51 is displayed on the touch panel 25 is the same as the position at which the official receipt button B41 illustrated in FIG. 8 is displayed on the touch panel 25. The official receipt button B51 is an example of the object for being operated by the operator to instruct issuance of the official receipt. The first payment screen SC5 illustrated in FIG. 10 is an example if "cash" is selected in Act 27. In Act 27, if a payment method other than cash is selected, a payment screen corresponding to the payment method selected is displayed on the touch panel 25. Even in this case, the official receipt button similar to the official receipt button B51 is displayed on the payment screen.

If the value of the variable F2 is 1, No is taken in Act 30, and the CPU 21 proceeds to the processing in Act 32.

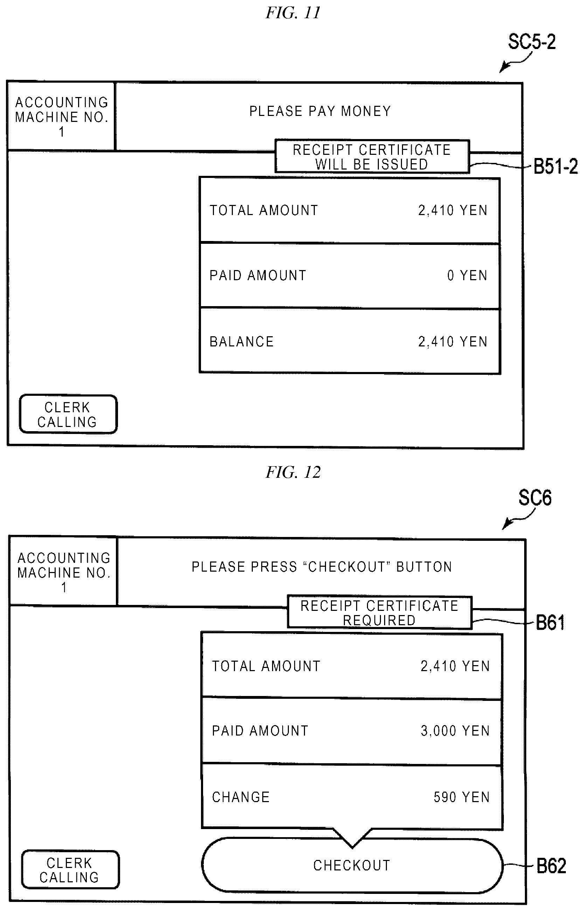

In Act 32, the CPU 21 generates an image corresponding to a second payment screen SC5-2 as illustrated in FIG. 11. The CPU 21 instructs the touch panel 25 to display the generated image. Upon receiving the instruction, the touch panel 25 displays the second payment screen SC5-2.

FIG. 11 is a view illustrating an example of the second payment screen SC5-2. In FIG. 11, the same reference numerals as those in FIG. 10 are applied to the same elements as those in FIG. 10. The second payment screen SC5-2 includes an official receipt button B51-2, instead of the official receipt button B51 of the first payment screen SC5. The official receipt button B51-2 is operated similarly to the official receipt button B41-2 in FIG. 9, if the customer instructs the settlement apparatus 20 to stop issuance of the official receipt. Similarly to the official receipt button B41-2 in FIG. 9, the official receipt button B51-2 displays a character string, e.g., "official receipt is issued", for notifying that the official receipt is issued, or a character string, e.g., "official receipt is not required", for recognizing that the official receipt button B51-2 is pressed if the official receipt is not required.

In Act 33, the CPU 21 confirms whether or not the operation for instructing issuance of the official receipt or cancellation of issuance of the official receipt is performed. In other words, the CPU 21 confirms whether or not a predetermined operation such as touching the official receipt button B51 displayed on the first settlement screen SC5 or the official receipt button B51-2 displayed on the second payment screen SC5-2 is performed. As described above, the official receipt button B51 displayed on the first payment screen SC5 is the object. By executing the processing in Act 33, the computer having the CPU 21 functions as an input unit for inputting the instruction of issuing the official receipt according to the operation performed on the object. If the operation for instructing issuance of the official receipt is not performed, No is taken in Act 33, and the CPU 21 proceeds to the processing in Act 34.

In Act 34, the CPU 21 confirms whether or not the amount (deposited amount) paid by the customer is equal to or greater than the total amount (settlement amount) of the commodities registered in the commodity list. If the deposited amount is smaller than the settlement amount, No is taken in Act 34, and the CPU 21 returns to the processing in Act 33. The CPU 21 repeatedly performs the processing in Act 33 and Act 34 until the operation for instructing issuance of the official receipt or cancellation of issuance of the official receipt is performed, or until the deposited amount is equal to or greater than the settlement amount. If the operation for instructing issuance of the official receipt or cancellation of issuance of the official receipt is performed in the standby state in Act 33 and Act 34, Yes is taken in Act 33, and the CPU 21 proceeds to the processing in Act 35.

In Act 35, similarly to Act 28, the CPU 21 substitutes the value obtained by the calculation expression of (1-F2) for the variable F2.

In Act 36, the CPU 21 changes the appearance of the official receipt button B51 or the official receipt button B51-2. If the value of the variable F2 is 1, the CPU 21 changes the screen displayed on the touch panel 25 from the first payment screen SC5 illustrated in FIG. 10 to the second payment screen SC5-2 illustrated in FIG. 11 to notify that the official receipt button B51 is operated. The CPU 21 generates an image corresponding to the second payment screen SC5-2. The CPU 21 instructs the touch panel 25 to display the generated image. Upon receiving the instruction, the touch panel 25 displays the second payment screen SC5-2. If the value of the variable F2 is 0, the CPU 11 changes the screen displayed on the touch panel 25 from the second payment screen SC5-2 to the first payment screen SC5 to notify that the official receipt button B51-2 is operated. The CPU 21 generates an image corresponding to the first payment screen SC5. The CPU 21 instructs the touch panel 25 to display the generated image. Upon receiving the instruction, the touch panel 25 displays the first payment screen SC5. After the processing in Act 36 is performed, the CPU 21 returns to the processing in Act 33.

The customer deposits cash equal to or greater than the settlement amount displayed on the first payment screen SC5 or the second payment screen SC5-2 to the settlement apparatus 20. If the customer selects the payment method other than cash in Act 27, the customer perform the settlement with the selected payment method. A payment processing with each payment method is well-known and thus description thereof is omitted.

If the deposited amount becomes equal to or greater than the settlement amount in the standby state in Act 33 and Act 34, Yes is taken in Act 34, and the CPU 21 proceeds to the processing in Act 37 in FIG. 4.

In Act 37, the CPU 21 confirms whether or not the value of the variable F2 is 0. If the value of the variable F2 is 0, Yes is taken in Act 37, and the CPU 21 proceeds to the processing in Act 38.

In Act 38, the CPU 21 generates an image corresponding to a first checkout screen SC6 as illustrated in FIG. 12. The CPU 21 instructs the touch panel 25 to display the generated image. Upon receiving the instruction, the touch panel 25 displays the first checkout screen SC6.

FIG. 12 is a view illustrating an example of the first checkout screen SC6. The first checkout screen SC6 is provided for the customer to confirm whether the settlement can be completed. The first checkout screen SC6 includes an official receipt button B61 and a checkout button B62. The official receipt button B61 is operated similarly to the official receipt button B41 in FIG. 8 and the official receipt button B51 in FIG. 10, if the customer instructs the settlement apparatus 20 to issue the official receipt.A position on the touch panel 25 at which the official receipt button B61 is displayed is the same as the position on the touch panel 25 at which the official receipt button B41 in FIG. 8 and the official receipt button B51 in FIG. 10 are displayed . The official receipt button B61 is an example of the object for being operated by the operator to instruct issuance of the receipt certificate. The checkout button B62 is operated if the customer instructs the settlement apparatus 20 to complete the settlement. For example, the checkout button B62 displays a character string, e.g., "checkout", for indicating that checkout is executed. Alternatively, the checkout button B62 may display a character string, e.g., "settlement completion", for indicating that the settlement is to be completed. The checkout button B62 is an example of the second button which does not indicate that the official receipt is issued. The first checkout screen SC6 shown in FIG. 12 is displayed if "cash" is selected as a payment method in Act 27, similarly to the first payment screen SC5 illustrated in FIG. 10.

If the value of the variable F2 is 1, No is taken in Act 37, and the CPU 21 proceeds to the processing in Act 39.

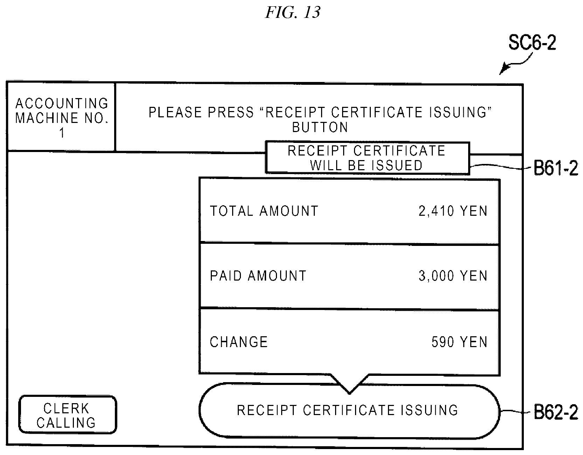

In Act 39, the CPU 21 generates an image corresponding to a second checkout screen SC6-2 as illustrated in FIG. 13. The CPU 21 instructs the touch panel 25 to display the generated image. Upon receiving the instruction, the touch panel 25 displays the second checkout screen SC6-2.

FIG. 13 is a view illustrating an example of the second checkout screen SC6-2. In FIG. 13, the same reference numerals as those in FIG. 12 are applied to the same elements as those in FIG. 12. The second checkout screen SC6-2 includes an official receipt button B61-2, instead of the official receipt button B61 of the first checkout screen SC6. Similarly to the official receipt button B41-2 in FIG. 9 and the official receipt button B51-2 in FIG. 11, the official receipt button B61-2 is operated if the customer instructs the settlement apparatus 20 to stop issuing the official receipt. The official receipt button B61-2 displays a character string, e.g., "official receipt is issued", for notifying that the official receipt is issued soon, or "official receipt is not required", for recognizing that the official receipt button B61-2 is pressed if the official receipt is not required. This is similar to the official receipt button B41-2 in FIG. 9 and the official receipt button B51-2 in FIG. 11. The second checkout screen SC6-2 includes a checkout button B62-2, instead of the checkout button B62 of the first checkout screen SC6. Similarly to the checkout button B62, the checkout button B62-2 is operated at the time the customer instructs the settlement apparatus 20 to complete the settlement. The checkout button B62-2 displays a character string, e.g., "official receipt issuing", for indicating that the official receipt is issued. In addition to the character string described above, a character string for indicating that the settlement is completed may also be displayed on the checkout button B62-2. The checkout button B62-2 is an example of the first button indicating that the official receipt is issued.

As described above, the touch panel 25 displays the first button if the value of the variable F2 is 1, and displays the second button if the value of the variable F2 is 0. Accordingly, by executing the processing in Act 37 to Act 39 , the computer having the CPU 21 functions as a display control module for displaying the first button indicating that the official receipt is issued or the second button not indicating that the official receipt is issued. The value of the variable F2 is determined based on the value of the variable F1 transmitted by the registration apparatus in Act 17 of FIG. 2. Therefore, by performing the processing in Act 17, the computer having the CPU 11 functions as the display control module.

In Act 40 in FIG. 4, the CPU 21 confirms whether or not the operation for instructing issuance of the official receipt or cancellation of issuance of the official receipt is performed. In other words, the CPU 21 confirms whether or not a predetermined operation such as touching the official receipt button B61-2 displayed on the first checkout screen SC6 or the official receipt button B61-2 displayed on the second checkout screen SC6-2 is carried out. As described above, the official receipt button B61 displayed on the first checkout screen SC6 is the object. Therefore, by executing the processing in Act 40, the computer having the CPU 21 functions as an input unit for inputting the instruction of issuing the official receipt according to the operation performed on the object. If the operation for instructing issuance of the official receipt is not performed, No is taken in Act 40, and the CPU 21 proceeds to the processing in Act 41.

In Act 41, the CPU 21 confirms whether or not the operation for instructing completion of the settlement is performed. In other words, the CPU 21 confirms whether or not a predetermined operation such as touching the checkout button B62 displayed on the first checkout screen SC6 or the checkout button B62-2 displayed on the second checkout screen SC6-2 is performed. If the operation for instructing completion of the settlement is not performed, No is taken in Act 41, and the CPU 21 returns to the processing in Act 40. The CPU 21 repeatedly performs the processing in Act 40 and Act 41 until the operation for instructing issuance of the official receipt or cancellation of issuance of the official receipt is performed, or until the operation for instructing completion of the settlement is performed. If the operation for instructing issuance of the official receipt or cancellation of issuance of the official receipt is performed in the standby state in Act 40 and Act 41, Yes is taken in Act 40, and the CPU 21 proceeds to the processing in Act 42.

In Act 42, similarly to Act 28, the CPU 21 substitutes the value obtained by the calculation expression of (1-F2) for the variable F2.

In Act 43, the CPU 21 changes the appearance of the official receipt button B61 and the checkout button B62, or the official receipt button B61-2 and the checkout button B62-2. If the value of the variable F2 is 1, the CPU 21 notifies that the official receipt button B61 is operated or that the official receipt is issued. The CPU 21 changes the screen displayed on the touch panel 25 from the first checkout screen SC6 illustrated in FIG. 12 to the second checkout screen SC6-2 illustrated in FIG. 13. Specifically, the CPU 21 generates an image corresponding to the second checkout screen SC6-2. The CPU 21 instructs the touch panel 25 to display the generated image. Upon receiving the instruction, the touch panel 25 displays the second checkout screen SC6-2. If the value of the variable F2 is 0, the CPU 11 changes the screen displayed on the touch panel 25 from the second checkout screen SC6-2 to the first checkout screen SC6 to notify that the official receipt button B61-2 is operated. The CPU 21 generates an image corresponding to the first checkout screen SC6. The CPU 21 instructs the touch panel 25 to display the generated image. Upon receiving the instruction, the touch panel 25 displays the first checkout screen SC6. As described above, the first button is displayed on the touch panel 25 if the value of the variable F2 is 1, and the second button is displayed on the touch panel 25 if the value of the variable F2 is 0. By performing the processing in Act 43 , the computer having the CPU 21 functions as a display control unit for displaying the first button for indicating that the official receipt certificate is issued or the second button for not indicating that the official receipt is issued. After the processing in Act 43 is performed, the CPU 21 returns to the processing in Act 40.

If the operation for instructing completion of the settlement is performed in the standby state in Act 40 and Act 41, Yes is taken in Act 41, and the CPU 21 proceeds to the processing in Act 44.

In Act 44, the CPU 21 performs the settlement processing. The settlement processing is carried out in a well-known method and thus, description thereof is omitted. As described above, the processing in Act 44 is performed in response to the operation of the checkout button B62 serving as the second button or the checkout button B62-2 serving as the first button. Therefore, by performing the processing in Act 44 is performed, the computer having the CPU 21 functions as the settlement module for performing the settlement on the transaction in response to the operation of the first button or the second button.

In Act 45, the CPU 21 confirms whether or not the value of the variable F2 is 1. If the value of the variable F2 is 1, Yes is taken in Act 45, and the CPU 21 proceeds to the processing in Act 46.

In Act 46, the CPU 21 instructs the printer 26 to issue the official receipt. Upon receiving the instruction, the printer 26 issues the official receipt. Therefore, by performing the processing in Act 46, the computer having the CPU 21 functions as an issuing unit for issuing the official receipt in cooperation with the printer 26. As described above, the CPU 21 instructs the printer 26 to issue the official receipt if the checkout button B62-2 serving as the first button is operated. If the checkout button B62 serving as the second button is operated, the CPU 21 does not instruct the printer 26 to issue the official receipt. Therefore, by performing the processing in Act 45 and Act 46, the computer having the CPU 21 functions as an issuing control module for controlling the issuing unit.

After the processing in Act 46 is performed, the CPU 21 returns to the processing in Act 21 of FIG. 3.

In Act 47, the CPU 21 instructs the printer 26 to issue the receipt. Upon receiving the instruction, the printer 26 issues the receipt.

After the processing in Act 47 is performed, the CPU 21 returns to the processing in Act 21 of FIG. 3.

According to the checkout system 1 of the first embodiment, the settlement apparatus 20 displays the checkout button B62-2 if issuing the official receipt is instructed by operating either of the official receipt button displayed on the registration apparatus 10 or the official receipt button displayed on the settlement apparatus 20 before the settlement is completed. Then if the checkout button B62-2 is operated, the settlement apparatus performs the settlement, and issues the official receipt. On the other hand, the settlement apparatus 20 displays the checkout button B62 if issuing the official receipt is not instructed before the settlement is completed. If the checkout button B62 is operated, the settlement apparatus performs the settlement, but does not issue the official receipt. If issuing the official receipt is instructed, the function and a display content of the checkout button are changed. In this manner, the customer is less likely to be confused on the operation of the checkout button compared to a case in which a plurality of different checkout buttons are displayed at once. The customer who does not need the official receipt can complete the settlement without concerning the operation of the official receipt button, and the customer is not confused on the operation of the official receipt button.

According to the checkout system 1 of the first embodiment, the registration apparatus 10 displays the official receipt button. Therefore, while the commodity is registered, the customer can instruct the settlement apparatus 20 to issue the official receipt by operating the official receipt button. While the commodity is registered, on the other hand, the store clerk can also instruct the settlement apparatus 20 to issue the official receipt by operating the official receipt button in response to the request of the customer.

According to the checkout system 1 of the first embodiment, the settlement apparatus 20 displays the official receipt button. Therefore, the customer can instruct the settlement apparatus 20 to issue the official receipt by operating the button displayed on the settlement apparatus 20 while the settlement is executed.

According to the checkout system 1 of the first embodiment, both the registration apparatus 10 and the settlement apparatus 20 display the official receipt button. Therefore, the customer operates either the official receipt button displayed on the registration apparatus 10 or the official receipt button displayed on the settlement 20. In this constitution, the customer can instruct the settlement apparatus 20 to issue the official receipt at any desired timing while the official receipt button is displayed from registration of commodities to completion of the settlement.

According to the checkout system 1 of the first embodiment, the official receipt button B21 displayed on the registration apparatus 10 is operated by the customer. The official receipt button B41, the official receipt button B51, and the official receipt button B61 which are displayed on the settlement apparatus 20 are operated by the customer. If the customer operates these official receipt buttons, the customer can instruct the settlement apparatus 20 to issue the official receipt earlier than the instruction for completion of the settlement, without requesting the store clerk to issue the official receipt.

According to the checkout system 1 of the first embodiment, the official receipt button B11 and the official receipt button B31 which are displayed on the registration apparatus 10 are operated by the store clerk. It may be considered that the customer who does not know that operation on the official receipt button B21 is needed or the customer who feels that it is troublesome to operate the official receipt button B21 verbally asks the store clerk to issue the official receipt. In this case, the store clerk can instruct the settlement apparatus 20 to issue the official receipt by operating the official receipt button B11 or the official receipt button B31.

According to the checkout system 1 of the first embodiment, the registration apparatus 10 displays the official receipt button B11 and the official receipt button B31 on the touch panel for store clerk 15 operated by the store clerk. The registration apparatus 10 displays the official receipt button B21 on the touch panel for customer 16 operated by the customer. If the official receipt button B11 or the official receipt button B31 is operated by the store clerk, the appearance of the official receipt button B11 or the official receipt button B31 is changed. At this time, the appearances of not only the official receipt button B11 or the official receipt button B31 but also the official receipt button B21 are changed. Conversely, if the official receipt button B21 is operated by the customer, the appearance of the official receipt button B21 is changed. At this time, appearances of not only the official receipt button B21 but also the official receipt button B11 or the official receipt button B31 are changed. Therefore, the store clerk can recognize that the official receipt button B21 is operated by the customer by observing the appearance of the official receipt button B11 or the official receipt button B31 displayed on the touch panel for store clerk 15. The customer can recognize that the official receipt button B11 or the official receipt button B31 is operated by the store clerk by observing the appearance of the official receipt button B21 displayed on the touch panel for customer 16.

### (Second Embodiment)

A main circuit configuration of the checkout system 1 according to a second embodiment is the same as that of the checkout system 1 according to the first embodiment, and thus the description thereof is not repeated.

In the second embodiment, the main memory 12 or the auxiliary memory device 13 of the registration apparatus 10 stores the control program described in relation to the control processing illustrated in FIG. 2 similarly to the first embodiment. The main memory 22 or the auxiliary memory device 23 of the settlement apparatus 20 stores the control program described in relation to the control processing illustrated in FIGS. 3 and 4 similarly to the first embodiment.

Hereinafter, an operation of the checkout system 1 according to the second embodiment is described with reference to the FIGS. 2 to 4. The contents of the processing described below are merely examples, and various processing capable of achieving similar results can be appropriately applied.

In the following description of the second embodiment, elements different from those of the first embodiment is mainly described.

In the second embodiment, in Act 3, the CPU 11 performs the same processing as the first embodiment. However, in the second embodiment, the CPU 11 displays a receipt button, instead of the official receipt button B11. If the receipt is not needed or is not issued, the operator of the registration apparatus 10 operates the receipt button in response to the request from the customer. The receipt button displays a character string, e.g., "receipt is not needed" for recognizing that the receipt button is pressed if issuing the receipt is not required. The receipt button is an example of the object for being operated by the operator to instruct not to issue the receipt.

In the second embodiment, in Act 4, the CPU 11 performs the same processing as the first embodiment. However, in the second embodiment, the CPU 11 displays a receipt button, instead of the official receipt button B21. The receipt button is operated if the customer does not want the store clerk to issue the receipt. The receipt button displays a character string, e.g., "please touch button if receipt is not needed" or "receipt is not needed", for recognizing that the receipt button is pressed if issuing the receipt is not needed. The receipt button is an example of the object for being operated by the operator to instruct not to issue the receipt.

In the second embodiment, in Act 6, the CPU 11 confirms whether or not the operation for instructing not to issue the receipt is performed. In other words, the CPU 11 confirms whether or not a predetermined operation such as touching the receipt button displayed on the registration screen SC1 or the receipt button displayed on the screen for customer SC2 is performed. Therefore, by executing the processing in Act 6 in the second embodiment, the computer having the CPU 11 inputs an instruction of not issuing the receipt according to the operation performed on the object.

In the second embodiment, in Act 10, the CPU 11 changes the appearance of the receipt button displayed instead of the official receipt button B11 and the official receipt button B21. If the value of the variable F1 is 1, the CPU 11 changes the appearance of the receipt button to be able to recognize that the receipt button is operated or that the receipt is not issued. If the value of the variable F1 is 0, the CPU 11 causes the appearance of the receipt button to return to the original appearance. If the value of the variable F1 is 1, a state of the receipt button displayed on the touch panel for store clerk 15 or the touch panel for customer 16 is referred to as a selected state, and, if the value of the variable F1 is 0, a state of the receipt button is referred to as a non-selected state.

In the second embodiment, in Act 12, the CPU 11 performs the same processing as in the first embodiment. However, in the second embodiment, the CPU 11 displays the receipt button instead of the official receipt button B31. The receipt button displays a character string, "receipt is not needed", for recognizing that the receipt button is pressed if the receipt is not required similarly to the receipt button displayed instead of the official receipt button B11. The receipt button is an example of the object for being operated by the operator to instruct not to issue the receipt.

In the second embodiment, in Act 13, the CPU 11 confirms whether or not the operation for instructing not to issue the receipt is performed. In other words, the CPU 11 confirms whether or not a predetermined operation such as touching the receipt button displayed on the subtotal screen SC3 is performed. By executing the processing in Act 13 in the second embodiment is performed, the computer having the CPU 11 inputs the instruction of not issuing the receipt according to the operation performed on the object.

In the second embodiment, in Act 16, the CPU 11 changes the appearance of the receipt button similarly to Act 10 in the second embodiment. However, the receipt button the appearance of which is changed by the CPU 11 is a receipt button displayed instead of the official receipt button B21 and a receipt displayed instead of the official receipt button B31.

In the second embodiment, in Act 24, the CPU 21 of the settlement apparatus 20 performs the same processing as in the first embodiment. However, in the second embodiment, the CPU 21 displays a first receipt button instead of the official receipt button B41. The first receipt button is operated at the time the customer instructs the settlement apparatus 20 not to issue the receipt. The first receipt button displays a character string, e.g., "please touch button if receipt is not needed" or "receipt is not required", for recognizing that the first receipt button is pressed if the receipt is not needed. The first receipt button is an example of the object for being operated by the operator to instruct not to issue the receipt.

In the second embodiment, in Act 25, the CPU 21 performs the same processing as in the first embodiment. However, in the second embodiment, the CPU 21 displays a second receipt button instead of the official receipt button B41-2. The second receipt button is operated at the time the customer instructs the settlement apparatus 20 to issue the receipt. The second receipt button displays a character string, e.g., "please touch button if receipt is needed" or "receipt is needed", for recognizing that the second receipt button is pressed if the receipt is required. Alternatively, the second receipt button displays a character string, e.g., "receipt is not issued" for indicating that the receipt is not issued.

In the second embodiment, in Act 26, the CPU 21 confirms whether or not the operation for instructing not to issue the receipt or to issue the receipt is performed. In other words, the CPU 21 confirms whether or not a predetermined operation such as touching first receipt button displayed on the first settlement screen SC4 or the second receipt button displayed on the second settlement screen SC4-2 is performed. As described above, the first receipt button is the object. By executing the processing in Act 26 in the second embodiment, the computer having the CPU 21 inputs an instruction of not issuing the receipt according to the operation performed on the object.

In the second embodiment, in Act 29, the CPU 21 changes the appearance of the first receipt button displayed instead of the official receipt button B41 or the second receipt button displayed instead of the official receipt button B41-2. If the value of the variable F2 is 1, the CPU 21 notifies that the first receipt button is operated or that the receipt is not issued. In other words, the CPU 21 changes the screen displayed on the touch panel 25 from the first settlement screen SC4 to the second settlement screen SC4-2. If the value of the variable F2 is 0, the CPU 11 changes the screen displayed on the touch panel 25 from the second settlement screen SC4-2 to the first settlement screen SC4 to notify that the second receipt button is operated.

In the second embodiment, in Act 31, the CPU 21 performs the same processing as in the first embodiment. However, in the second embodiment, the CPU 21 displays the first receipt button instead of the official receipt button B51. Similarly to the first receipt button displayed instead of the official receipt button B41, the first receipt button is operated if the customer instructs the settlement apparatus 20 not to issue the receipt. The first receipt button displays a character string, e.g., "please touch button if receipt is not needed" or "receipt is not required", for recognizing that the first receipt button is pressed if the receipt is not required. This is similar to the first receipt button displayed instead of the official receipt button B41. The first receipt button is an example of the object for being operated by the operator to instruct not to issue the receipt.

In the second embodiment, in Act 32, the CPU 21 performs the same processing as in the first embodiment. However, in the second embodiment, the CPU 21 displays the second receipt button instead of the official receipt button B51-2. Similarly to the second receipt button displayed instead of the official receipt button B41-2, the second receipt button is operated if the customer instructs the settlement apparatus 20 to issue the receipt. The second receipt button displays a character string, e.g., "Please touch button if receipt is needed" or "receipt is needed" for notifying that the second receipt button is pressed if the receipt is required. This is similar to the second receipt button displayed instead of the official receipt button B41. Alternatively, the second receipt button displays a string, e.g., "receipt is not issued" for indicating that the receipt is not issued.

In the second embodiment, in Act 33, the CPU 21 confirms whether or not the operation for instructing not to issue the receipt or to issue the receipt is performed. The CPU 21 confirms whether or not a predetermined operation such as touching the first receipt button displayed on the first payment screen SC 5 or the second receipt button displayed on the second payment screen SC5-2 is performed. As described above, the first receipt button is the object. Therefore, by executing the processing in Act 33 in the second embodiment, the computer having the CPU 21 input an instruction of not issuing the receipt according to the operation to the object.

In the second embodiment, in Act 36, similarly to Act 29 in the second embodiment, the CPU 21 changes the appearance of the first receipt button displayed instead of the official receipt button B51 or the second receipt button displayed instead the official receipt button B51-2.

In the second embodiment, in Act 38, the CPU 21 performs the same processing as in the first embodiment. However, in the second embodiment, the CPU 21 displays the first receipt button instead of the official receipt button B61. Similarly to the first receipt button displayed instead of the official receipt button B41 and the first receipt button displayed instead of the official receipt button B51, the first receipt button is operated if the customer instructs the settlement apparatus 20 not to issue the receipt. The first receipt button is an example of the object for being operated by the operator to instruct not to issue the receipt. In the second embodiment, the checkout button B62-2 may display a character string, e.g., "receipt is issued", for indicating that the receipt is issued.

In the second embodiment, in Act 39, the CPU 21 performs the same processing as in the first embodiment. However, in the second embodiment, the CPU 21 displays the second receipt button instead of the official receipt button B61-2. Similarly to the second receipt button displayed instead of the official receipt button B41-2 and the second receipt button displayed instead of the official receipt button B51-2, the second receipt button is operated if the customer instructs the settlement apparatus 20 to issue the receipt. The second receipt button displays a character string, e.g., "please touch button if the receipt is needed" or "receipt is needed", for notifying that the second receipt button is pressed if the receipt is required. Alternatively, the second receipt button displays a string, e.g., "receipt is not issued", for indicating that the receipt is not issued. This is similar to the second receipt button displayed instead of the official receipt button B41 and the official receipt button B51-2. In the second embodiment, the checkout button B62-2 displays a character string, e.g., "receipt is not issued", for indicating that the receipt is not issued. Alternatively, in the second embodiment, the checkout button B62-2 may display a character string for indicating that the settlement is completed.

In the second embodiment, in Act 40, the CPU 21 confirms whether or not the operation for instructing not to issue the receipt or to issue the receipt is performed. The CPU 21 confirms whether or not a predetermined operation such as touching the first receipt button displayed on the first checkout screen SC6 or the second receipt button displayed on the second checkout screen SC6-2 is performed. As described above, the first receipt button is the object. Therefore, by executing the processing in Act 40 in the second embodiment, the computer having the CPU 21 inputs an instruction of not issuing the receipt according to the operation performed on the object.

In the second embodiment, in Act 43, similarly to Act 29 in the second embodiment, the CPU 21 changes the appearance of the first receipt button and the checkout button B62 which are displayed instead of the official receipt button B61 or the appearance of the second receipt button and the checkout button B62-2 which are displayed instead of the official receipt button B61-2.

In the second embodiment, the CPU 21 does not perform the processing in Act 46.

In the second embodiment, in Act 47, the CPU 21 instructs the printer 26 to issue the receipt. Upon receiving the instruction, the printer 26 issues the receipt. For example, the receipt includes contents relating to the settlement such as the date and time of the settlement, details of the purchased commodity, or the settlement amount. As described above, by executing the processing in Act 47 in the second embodiment, the computer having the CPU 21 issues the receipt in cooperation with the printer 26. As described above, if the value of the variable F2 is 1 by operating the receipt button, the CPU 21 does not output an instruction that the receipt is issue to the printer 26. If the value of the variable F2 is 0, the CPU 21 outputs an instruction that the receipt is issue to the printer 26. As for the variable F2, at the time the settlement is completed, the value of the variable F2 is set to 1 by instructing not to issue the receipt prior to completion of the settlement. The value of the variable F2 is set to 0 if the instruction that the receipt is not issued is not made before the settlement is completed. If the instruction that the receipt is not issued is made prior to completion of the settlement, the CPU 21 does not issue the receipt. If the instruction that the receipt is not issued is not made before the settlement is completed, the CPU 21 controls the printer 26 to issue the receipt.

According to the checkout system 1 of the second embodiment, the settlement apparatus 20 does not issue the receipt if the instruction that the receipt is not issued is made before completion of the settlement by operating the receipt button displayed on the registration apparatus 10 or the first receipt button displayed on the settlement apparatus 20. On the other hand, the settlement apparatus 20 issues the receipt in response to completion of the settlement if the instruction that the receipt is not issued is not made before the settlement is completed. Therefore, the customer who needs the receipt only completes the settlement without concerning the operation of the first and second receipt buttons, and thus the customer is not confused with the operation of the first and second receipt buttons.

According to the checkout system 1 of the second embodiment, the registration apparatus 10 displays the first receipt button. Therefore, even while the commodity is registered, the customer can instruct the settlement apparatus 20 not to issue the receipt by operating the first receipt button. Even while the commodity is registered, the store clerk can instruct the settlement apparatus 20 not to issue the receipt by operating the first receipt button in response to the request by the customer.

The first and second embodiments described above can be modified as follows.

The checkout system 1 according to the first embodiment and the second embodiment is a semi-self-checkout system including the registration apparatus 10 operated by the store clerk and the settlement apparatus 20 operated by the customer. However, instead of the semi-self-checkout system 1, a self-checkout system, in which the registration apparatus and the settlement apparatus are integrated with each other, operated by the customer as the operator, can be applied.

In the first embodiment and the second embodiment, both the registration apparatus 10 and the settlement apparatus 20 display the official receipt button, the receipt button, or the first and second receipt buttons. However, only one of the registration apparatus 10 and the settlement apparatus 20 may display the official receipt button, the receipt button, or the first and second receipt buttons.

In the first embodiment and the second embodiment, the touch panel for store clerk 15 and the touch panel for customer 16 of the registration apparatus 10 display the official receipt button or the receipt button. However, only one of the touch panel for store clerk 15 and the touch panel for customer 16 may display the official receipt button or the receipt button.

In the first embodiment, the settlement apparatus 20 may issue the receipt in addition to the official receipt, the official receipt is issued. In this case, the settlement apparatus 20 may print the receipt and the official receipt on the same paper.

In the first embodiment, the button for instructing that the official receipt is issued is described, and in the second embodiment, the button for instructing that the receipt is not issued is described. However, the invention is also applicable to an example in which a document other than the official receipt and the receipt are issued or not issued. For example, the document includes a coupon ticket, a discount ticket, a lottery ticket, a voucher issued for the customer who purchases the commodity which satisfies a predetermined specific condition. In this case, a button instructing that these tickets are issued or not issued is displayed instead of the official receipt button or the first receipt button. The checkout button displays a character string for indicating that these tickets are issued or not issued. Even if the button for instructing that these tickets are issued is operated, the settlement apparatus 20 does not issue these tickets if the specific condition is not satisfied.

The official receipt button or the first receipt button may be a hardware element such as a button physically formed. In this case, the hardware element is an example of the object for being operated by the operator to instruct to issue the official receipt or not to issue the receipt. The second receipt button may also be the hardware element such as the button physically formed.

In the first embodiment, the positions on the touch panel on which the official receipt button B41, the official receipt button B51, and the official receipt button B61 are respectively displayed may be different from each other.

While certain embodiments have been described, these embodiments have been presented by way of example only, and are not intended to limit the scope of the invention. Indeed, the novel methods and systems described herein may be embodied in a variety of other forms; furthermore, various omissions, substitutions and changes in the form of the methods and systems described herein may be made without departing from the framework of the invention. The accompanying claims and their equivalents are intended to cover such forms or modifications as would fall within the scope of the invention.

## Claims

1. A settlement apparatus comprising:
an issuing module configured to issue an official receipt;
an input module configured to input an instruction of issuing the official receipt according to an operation performed on an object by an operator;
a display control module configured to display a first button indicating that the official receipt is issued if the instruction is input by the input module before settlement of the transaction is completed, and to display a second button not indicating that the official receipt is issued if the instruction is not input by the input module before settlement of the transaction is completed;
a settlement module configured to perform settlement of the transaction in response to the operation on the first button or the second button; and
an issuing control module configured to control the issuing module to issue the official receipt for the settlement performed by the settlement module if the first button is operated and not to issue the official receipt if the second button is operated.

2. The settlement apparatus according to claim 1, further comprising:
a CPU configured to set a flag on if said instruction is input by the input module before settlement of the transaction is completed, and set the flag off if said instruction is not input by the input module before settlement of the transaction is completed; and
wherein the display control module is configured to display a first button indicating that the official receipt is issued if the flag is set on, and to display a second button not indicating that the official receipt is issued if the flag is set off.

3. The settlement apparatus according to claim 1 or 2, wherein
the issuing module is further configured to issue a receipt different from the official receipt; and
the issuing control module is configured to control the issuing module to issue the receipt for the settlement performed by the settlement module if the second button is operated and not to issue the receipt if the first button is operated.

4. The settlement apparatus according to any one of claims 1 to 3, wherein the object is displayed on at least one of a display device for store clerk or a display device for customer.

5. A checkout system comprising the settlement apparatus according to any one of claims 1 to 4, and a registration apparatus.

6. A method for issuing an official receipt by a settlement apparatus, comprising:
inputting an instruction of issuing the official receipt according to the operation performed on an object by an operator;
displaying a first button indicating issuance of the official receipt if the instruction is input before settlement of the transaction is completed;
displaying a second button not indicating issuance of the official receipt if the instruction is not input before settlement of the transaction is completed;
performing settlement of the transaction in response to the operation on the first button or the second button; and
controlling the issuing module to issue the official receipt for the settlement performed in the settlement if the first button is operated and not to issue the official receipt if the second button is operated.

7. The method according to claim 6, further comprising:
setting a flag on if said instruction is input by the input module before settlement of the transaction is completed;
setting the flag off if said instruction is not input by the input module before settlement of the transaction is completed; and wherein
the step of displaying is further comprising the displaying a first button indicating that the official receipt is issued if the flag is set on; and
the step of displaying is further comprising the displaying a second button not indicating that the official receipt is issued if the flag is set off.

8. The method according to claim 6 or 7, wherein
the step of controlling is further comprising the controlling the issuing module to issue a receipt different from the official receipt; and
the step of controlling is further comprising the controlling the issuing module to issue the receipt for the settlement performed by the settlement module if the second button is operated and not to issue the receipt if the first button is operated.
